(19) Europäisches Patentamt
European Patent Office
Office européen des brevets

(11) **EP 4 726 360 A1**

(12) **EUROPEAN PATENT APPLICATION**
published in accordance with Art. 153(4) EPC

(43) Date of publication:
**15.04.2026 Bulletin 2026/16**

(21) Application number: **24819230.4**

(22) Date of filing: **29.05.2024**

(51) International Patent Classification (IPC):
**G01N 15/13** (2024.01)     **G01N 15/12** (2024.01)

(52) Cooperative Patent Classification (CPC):
**G01N 15/12; G01N 15/13**

(86) International application number:
**PCT/JP2024/019658**

(87) International publication number:
**WO 2024/252999 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.06.2023 JP 2023095732**

(71) Applicant: **ADVANTEST CORPORATION**
**Chiyoda-ku**
**Tokyo 100-0005 (JP)**

(72) Inventors:
• IMAI, Yasuharu
  Tokyo 100-0005 (JP)
• SATO, Hiroshi
  Tokyo 100-0005 (JP)
• OINUMA, Kosuke
  Tokyo 100-0005 (JP)
• WASHIZU, Nobuei
  Tokyo 100-0005 (JP)

(74) Representative: **Meissner Bolte Partnerschaft
mbB**
**Patentanwälte Rechtsanwälte**
**Postfach 10 26 05**
**86016 Augsburg (DE)**

(54) **FINE PARTICLE MEASUREMENT DEVICE AND FINE PARTICLE MEASUREMENT METHOD**

(57)    The microparticle measuring apparatus 1 is used in combination with a pore-based device 100. The pore-based device 100 has a first liquid chamber 122 and a second liquid chamber 124 separated by a partition having a pore. A measuring instrument 200 is structured to measure a current signal that flows between a first electrode E1 provided in the first liquid chamber 122 and a second electrode E2 provided in the second liquid chamber 124. Upon detection of the clogging of the pore-based device 100 during the measurement, the pressure controller 400 generates a pressure difference between the first liquid chamber 122 and the second liquid chamber 124.

FIG. 3

**Description**

TECHNICAL FIELD

The present disclosure relates to measurement with use of a pore-based device.

BACKGROUND ART

A method for measuring particle size distribution, called electrical sensing zone method (based on the Coulter's principle), has been known. In this measurement method, an electrolyte solution that contains particles is allowed to pass through a pore called nanopore. During passage of each particle through the pore, the volume of the electrolyte solution in the pore will be decreased by an amount equivalent to the volume of the particle, thus increasing electric resistance of the pore. The volume (or, particle size) of the particle can therefore be determined, by measuring the electric resistance of the pore.

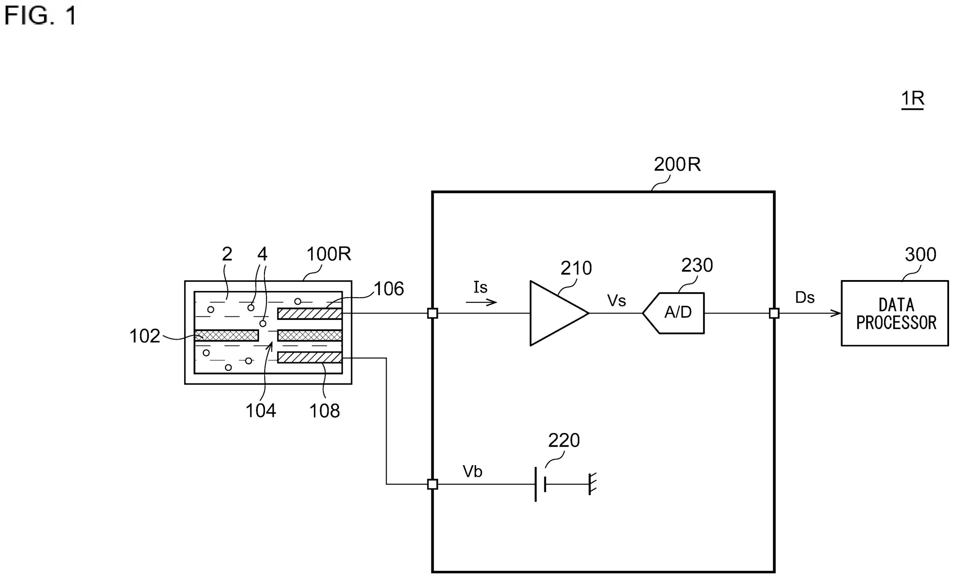

Fig. 1 is a block diagram illustrating a microparticle measuring apparatus 1R based on the electrical sensing zone method. The microparticle measuring apparatus 1R has a pore-based device 100R, a measuring instrument 200R, and a processor 300.

The inside of the pore-based device 100R is filled with an electrolyte solution 2 that contains particles 4 to be detected. The inside of the pore-based device 100R is separated by a pore chip 102 into two spaces, in which an electrode 106 and an electrode 108 are individually provided. Under potential difference generated between the electrode 106 and the electrode 108, an ion current flows between the electrodes, during which the particles 4 migrate from one space through the pore 104 into the other space while being driven by electrophoresis.

The measuring instrument 200R generates a potential difference between the pair of electrodes 106 and 108, and acquires information correlated with resistance Rp between the pair of electrodes. The measuring instrument 200R has a transimpedance amplifier 210, a voltage source 220, and a digitizer 230. The voltage source 220 is structured to generate potential difference Vb between the pair of electrodes 106 and 108. The potential difference Vb provides a driving force of electrophoresis, as well as a bias signal for measuring the resistance Rp.

Between the pair of electrodes 106 and 108, there flows microcurrent Is which is inversely proportional to the resistivity of the pore 104.

$$Is = Vb/Rp...(1)$$

The transimpedance amplifier 210 is structured to convert the microcurrent Is into a voltage signal Vs. Given a conversion gain as r, an equation below holds.

$$Vs = -r \times Is...(2)$$

Substitution of equation (1) into the equation (2) gives equation (3) below.

$$Vs = -Vb \times r/Rp...(3)$$

The digitizer 230 is structured to convert the voltage signal Vs into digital data Ds. The voltage signal Vs, which is inversely proportional to the resistance Rp of the pore 104, is obtainable in this way, with use of the measuring instrument 200R. The processor 300 is structured to process the digital data Ds, and to analyze count, particle size distribution or the like of the particles 4 contained in the electrolyte solution 2.

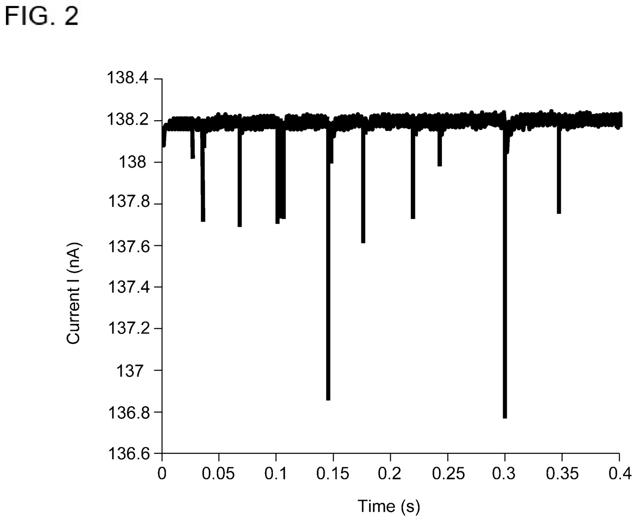

Fig. 2 is an exemplary waveform chart of the microcurrent Is measured with the measuring instrument 200R. Note that the ordinates and the abscissae of waveform charts and time charts referred to herein are appropriately enlarged or shrunk for easy understanding, and also the waveforms illustrated herein are simplified, exaggerated or emphasized for easy understanding.

During a short period of passage of each particle, the resistance Rp of the pore 104 increases. The current Is therefore decreases in a pulsated manner, every time one particle passes. Amplitude of each pulsed current correlates with the particle size.

RELATED-ART LITERATURE

PATENT LITERATURE

Patent Literature 1: JP 2009-014702 A
Patent Literature 2: JP 2017-120257 A

SUMMARY OF INVENTION

TECHNICAL PROBLEM

In some cases, the particles to be detected or other contained substance would clog the pore (pore clogging) during the measurement. The pore clogging, once it occurs, would disable the measurement. A technique of reversing the direction of electrophoresis for resolving the pore clogging has been proposed. Upon detection of the clogging in the structure illustrated in Fig. 1, the voltage source 220 reverses the polarity of the bias voltage applied to the electrodes 106, 108. This pushes the substance clogged in the pore back to the opposite side, thereby resolving the clogging.

Despite ease of use, the reversal of polarity of the bias voltage suffers from low ability of unclogging due to the restrictions below.

First, an upper limit of applicable current for the current measurement makes it impossible to apply strong electrophoretic force. Although usual electrophoresis generates the electrophoretic force with a current of several to several hundreds of milliamperes, the current measurement with use of the pore specifically having a diameter in the micrometer to nanometer range can afford only several tens of nanoamperes to several tens of microamperes of current.

Second, application of a large current will cause electrolysis at the electrodes. The electrolysis, once it occurs, will change the concentration of the electrolyte, thus modifying preconditions of the measurement.

Third, the chemical state around the electrodes will change due to the reversal of polarity. A voltage-current curve of the electrode-solution measured by cyclic voltammetry usually presents hysteresis, so that the same current state would not always be obtainable even under the same applied voltage.

For these reasons, the reversal of polarity of the bias voltage would result in a case where the clogging cannot be resolved. The clogging in this case is tried to be resolved by making a pause in the measurement, and re-injecting the electrolyte solution and a test solution into the pore-based device. If the failure still persists, the pore-based device per se will be discarded, and a new pore-based device will be used instead.

The present disclosure has been arrived at considering such circumstances, wherein one of exemplary objects of a certain mode of the disclosure is to provide a microparticle measuring apparatus capable of solving the problem of clogging.

SOLUTION TO PROBLEM

One aspect of the present disclosure relates to a microparticle measuring apparatus used in combination with a pore-based device. The pore-based device has a first liquid chamber and a second liquid chamber separated by a partition having a pore. The microparticle measuring apparatus has a measuring instrument structured to measure a current signal that flows between a first electrode provided in the first liquid chamber and a second electrode provided in the second liquid chamber; and a pressure controller structured to generate a pressure difference between the first liquid chamber and the second liquid chamber, upon detection of clogging of the pore-based device during the measurement.

Another aspect of the present disclosure relates to a microparticle measuring method with use of a pore-based device. The pore-based device has a first liquid chamber and a second liquid chamber separated by a partition having a pore. The microparticle measuring method includes: measuring a current signal that flows between a first electrode provided in the first liquid chamber and a second electrode provided in the second liquid chamber; detecting clogging of the pore-based device during measurement; and generating a pressure difference between the first liquid chamber and the second liquid chamber, upon detection of the clogging.

Note that also free combinations of these constituents, and also any of the constituents and expressions exchanged among the method, apparatus, and system, are valid as the modes of the present invention or the present disclosure. Also note that the description of this section (SOLUTION TO PROBLEM) does not describe all essential features of the invention, and also subcombinations of these features described may therefore constitute the invention.

ADVANTAGEOUS EFFECTS OF INVENTION

One aspect of the present disclosure can solve the problem of clogging.

BRIEF DESCRIPTION OF DRAWINGS

Fig. 1      is a block diagram illustrating a microparticle measuring apparatus based on the electrical sensing zone method.

Fig. 2      is an exemplary waveform chart of microcurrent Is measured with a measuring instrument.

Fig. 3      is a diagram illustrating a microparticle measuring apparatus according to one embodiment.

Fig. 4      is a diagram for explaining operations of the microparticle measuring apparatus illustrated in Fig. 3.

Fig. 5      is a diagram illustrating relationships between pressure and count of passed particles.

Fig. 6      is a block diagram of the measuring instrument according to one example.

Fig. 7      is a diagram illustrating an exemplary structure of the pressure controller according to one example.

Fig. 8      is a diagram illustrating an exemplary structure of a pressure controller according to one example.

DESCRIPTION OF EMBODIMENTS

(Outline of Embodiments)

Some exemplary embodiments of the present disclosure will be outlined. This outline is intended for briefing some concepts of one or more embodiments, for the purpose of basic understanding of the embodiments, as an introduction before detailed description that follows, without limiting the scope of the invention or disclosure. This outline is not an extensive overview of all possible embodiments, and is therefore intended neither to specify key elements of all embodiments, nor to delineate the scope of some or all of the embodiments. For convenience, the term "one embodiment" may be used to designate a single embodiment (Example or Modified Example), or a plurality of embodiments (Examples or Modified Examples) disclosed in the present specification.

The microparticle measuring apparatus according to one embodiment is used in combination with a pore-based device. The pore-based device has a first liquid chamber and a second liquid chamber separated by a partition having a pore. The microparticle measuring apparatus has a measuring instrument structured to measure a current signal that flows between a first electrode provided in the first liquid chamber and a second electrode provided in the second liquid chamber; and a pressure controller structured to generate a pressure difference between the first liquid chamber and the second liquid chamber, upon detection of clogging of the pore-based device during the measurement.

With such structure, the clogging may be resolved by a strong force, with use of pressure for resolving the clogging. Moreover, it is no longer necessary to apply large current for resolving the clogging, whereby electrolysis at the electrodes, or chemical state around the electrodes due to reversal of polarity may be suppressed, thus enabling accurate measurement. Note that "clogging" does not only refer to full closure of the pore, but also encompasses partial closure, and even a state where a sign of clogging is detected.

In one embodiment, the microparticle measuring apparatus may have a controller structured to detect the clogging based on the current signal measured by the measuring instrument. The current signal may contain a DC component (base current), and an AC component (pulsed current) superposed thereon. Upon clogging, the current signal demonstrates a characteristic change. The clogging is detectable by detecting such change.

In one embodiment, the controller may be structured to activate the pressure controller when the clogging is detected. The current signal obtained while the pressure controller is operating is not used for particle measurement.

In one embodiment, the controller may alternatively record pressure information (pressure value or state of the pressure controller) into a file. This makes it possible to determine, in the analysis after the measurement, an interval during which unclogging takes place with reference to the pressure information recorded in the file, and to make the data obtained in this interval unused for the microparticle analysis.

In one embodiment, the controller may be structured to stop the pressure controller when the clogging is determined to be cleared based on the current signal. This can shorten the stop period of the measurement, and can shorten the measurement time.

In one embodiment, the controller may be structured to detect the clogging based on the AC component of the current signal. Upon start of clogging, pulses will appear more frequently. The controller may therefore detect the clogging with reference to the frequency of appearance of the pulses.

In one embodiment, the controller may be structured to detect the clogging based on the DC component of the current signal. The DC component (base current) of the current signal declines as the clogging progresses. The controller may therefore detect the clogging with reference to the decline of the DC component.

In one embodiment, the measuring instrument may be able to reverse the polarity of the voltage applied to the first electrode and the second electrode. Upon detection of the clogging, the pressure controller may generate a pressure difference in a direction that corresponds to the preceding polarity of the voltage.

In one embodiment, the pressure controller may generate the pressure difference by increasing or decreasing the pressure of the first liquid chamber relative to the atmosphere, while the second liquid chamber is opened to the atmosphere.

In one embodiment, the measuring instrument may have a transimpedance amplifier structured to convert the current signal into a voltage signal; and a digitizer structured to convert an output of the transimpedance amplifier into a digital signal.

(Embodiments)

Preferred embodiments will be explained below, referring to the attached drawings. All similar or equivalent constituents, members and processes illustrated in the individual drawings will be given same reference numerals, so as to properly avoid redundant explanations. The embodiments are merely illustrative, and are not restrictive about the invention. All features and combinations thereof described in the embodiments are not always necessarily essential to the present invention.

In the present specification, a "state in which a member A is coupled to a member B" includes a case where the member A and the member B are physically and directly coupled, and a case where the member A and the member B are indirectly coupled while placing in between some other member that does not substantially affect the electrically coupled state, or does not degrade the function or effect demonstrated by the coupling thereof.

Similarly, a "state in which member C is provided between member A and member B" includes a case where the member A and the member C, or the member B and the member C are directly coupled, and a case where they are indirectly coupled, while placing in between some other member that does not substantially affect the electrically coupled state among the members, or does not degrade the function or effect demonstrated by the coupling thereof.

Dimensions (thickness, length, width, etc.) of the individual members illustrated in the drawings may be appropriately enlarged or shrunk for easy understanding. Furthermore, the dimensions of the plurality of members do not necessarily indicate the dimensional relationship among them, so that a certain member A, if depicted thicker than another member B in a drawing, may even be thinner than the member B.

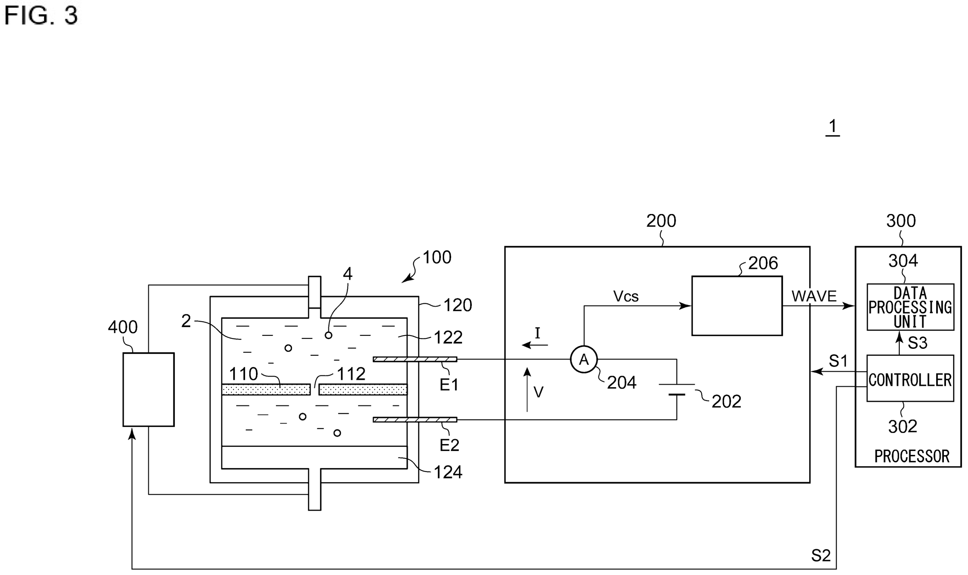

Fig. 3 is a diagram illustrating a microparticle measuring apparatus 1 according to one embodiment. The microparticle measuring apparatus 1 has a pore-based device 100, a measuring instrument 200, a processor 300, and a pressure controller 400.

The pore-based device 100 has a pore chip 110 and a chip case 120. The pore chip 110 has a pore 112 formed therein. The pore chip 110 is accommodated inside the chip case 120, and partitions the internal space of the chip case 120 into a first liquid chamber 122 and a second liquid chamber 124. The first liquid chamber 122 and the second liquid chamber 124 communicate through the pore 112. The first liquid chamber 122 has a first electrode E1 provided therein, and the second liquid chamber 124 has a second electrode E2 provided therein.

For use in the measurement, the internal space of the chip case 120 is filled with an electrolyte solution 2 that contains particles 4 to be measured.

The measuring instrument 200 is structured to apply voltage V between the first electrode E1 and the second electrode E2, and to measure ion current I that flows between the first electrode E1 and the second electrode E2. The measuring instrument 200 has a voltage source 202, a current detection circuit 204, and a waveform capture module 206. The voltage source 202 is structured to generate potential difference V between the first electrode E1 and the second electrode E2. Under the potential difference V, the particles 4 contained in the electrolyte solution 2 migrate in an electrophoretic manner.

The current detection circuit 204 is structured to generate a current detection signal Vcs that represents the ion current I flowing from the first electrode E1 to the second electrode E2. The waveform capture module 206 is structured to capture waveform of the current detection signal Vcs. Waveform data WAVE generated by the waveform capture module 206 is transmitted to the processor 300.

The processor 300 has a function of a controller 302 that controls the entire microparticle measuring apparatus 1, and a function of a data processing unit 304 that processes the waveform data WAVE and estimates the particle size and the like of the particles 4. The processor 300 may be implemented by a combination of hardware such as general-purpose laptop computer, desktop computer, workstation, or tablet terminal, with a dedicated software program. The processor 300 may alternatively be hardware dedicated to the microparticle measuring apparatus 1.

The controller 302 can set measurement conditions and the like of the measuring instrument 200 based on a control signal S1. The controller 302 generates a control signal S2 that instructs control for operation and stop of the pressure controller 400 described later. The controller 302 can also control the state of the data processing unit 304 based on a control signal S3.

The data processing unit 304 carries out processing such as particle size estimation based on the waveform data WAVE.

The processor 300 is structured to be able to detect clogging of the pore 112 of the pore-based device 100. The pressure controller 400 is stopped during normal measurement with the measuring instrument 200. Upon detection of the clogging of the pore-based device 100 during the measurement, the pressure controller 400 generates a pressure difference between the first liquid chamber 122 and the second liquid chamber 124. The pressure is preferably generated in a direction opposite to the direction of electrophoretic migration of the particles during the measurement. The direction of migration of the particles in the electrolyte solution 2 is determined by directionality of the electric field and the molecular charge (positive or negative). In many cases, the particles to be measured are negatively charged in the solution, and therefore migrate from the negative electrode towards the positive electrode.

In this embodiment, the controller 302 has a clogging detection function. More specifically, the controller 302 detects clogging based on the waveform data WAVE of the current signal I from the measuring instrument 200.

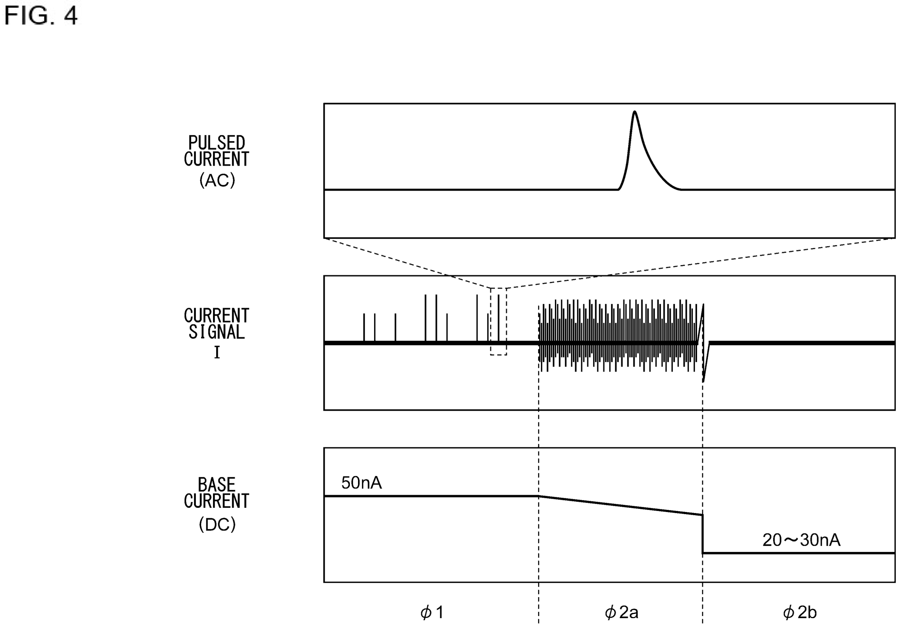

Fig. 4 is a waveform diagram of the current signal I. The current signal I presented in the middle tier contains a DC component (base current) that flows as a result of electrophoresis irrespective of presence of the particles, and an AC component (pulsed current) ascribed to passage of the particles through the pore 112. The upper tier of Fig. 4 presents a pulsed current that corresponds to a single particle, and the lower tier of Fig. 4 presents the base current. Fig. 4 illustrates a normal state φ1 in which clogging has not occurred yet; a state (precursory state) φ2a in which clogging is in progress, or, a sign of clogging appears; and a state (fully clogged state) φ2b in which full clogging has occurred. The precursory state φ2a and the fully clogged state φ2b will be collectively referred to as a clogged state φ2.

In one embodiment, the controller 302 may be structured to detect the clogged state φ2, with reference to the AC component (pulsed current) of the current signal I. In the normal state φ1, the pulsed current is observed every time the particle passes, as illustrated in Fig. 4. In contrast in the precursory state φ2a, the pulsed current more frequently occurs than in the normal state φ1. In the fully clogged state φ2b, frequency of occurrence of the pulsed current approaches zero. The controller 302 can therefore detect the precursory state φ2a or the fully clogged state φ2b, with reference to the frequency of occurrence of the pulsed current.

In one embodiment, the controller 302 may be structured to detect the clogged state φ2, with reference to the DC component (base current) of the current signal I. In the normal state φ1, a relatively large base current is observed, as illustrated in Fig. 4. In contrast in the precursory state φ2a, the base current declines with time. In the fully clogged state φ2b, the base current is maintained at a very small level. The controller 302 can therefore detect the precursory state φ2a or the fully clogged state φ2b, with reference to the base current.

The controller 302 may alternatively detect the clogged state φ2, with use of the characteristic changes both in the pulsed current and the base current, thereby further enhancing the detection accuracy.

The current measurement by the measuring instrument 200 is sustained, also during operation of the pressure controller 400. The controller 302 is structured to monitor the current signal I during the operation of the pressure controller 400, and to detect resolution of the clogged state φ2, that is, recovery of the normal state φ1 with reference to the current signal I. Also return to the normal state φ1 is detectable, with reference to at least either the base current or the pulsed current of the current signal I.

The controller 302 generates the control signal S2 for controlling the state of the pressure controller 400, and the control signal S3 for controlling the state of the data processing unit 304, depending on presence or absence of the clogging. Upon detection of the clogging, the controller 302 causes the pressure controller 400 to operate. During the operation of the pressure controller 400, the controller 302 stops the data processing unit 304 from carrying out the processing regarding particle measurement, since the accuracy of the current signal measured by the measuring instrument 200 would degrade.

Upon detection of resolution of the clogging, the controller 302 stops the pressure controller 400. The controller also causes the data processing unit 304 to resume the processing regarding particle measurement.

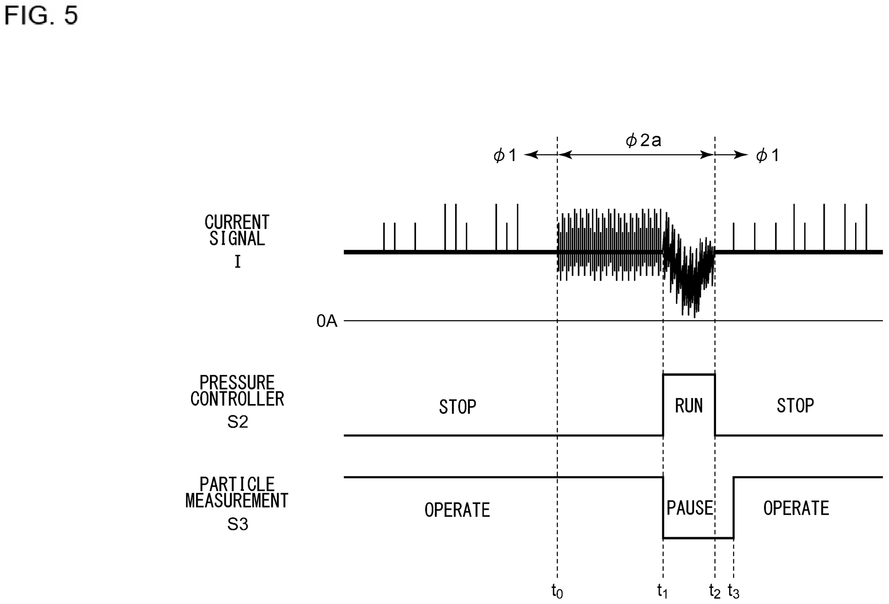

Fig. 5 is a diagram for explaining operations of the microparticle measuring apparatus 1 with the pore-based device 100 illustrated in Fig. 3. The controller 302 herein is assumed to detect the precursory state φ2a.

Before time t0, the microparticle measuring apparatus 1 normally operates. The clogging starts at time t0, where pulses at short intervals begin to appear in the current signal I. At time t1, the controller 302 switches the pressure controller 400 to the operation mode. Upon start of operation of the pressure controller 400, the particles clogged in the pore 112 are pushed back towards the original liquid chamber, by the pressure of the liquid. The clogging is resolved in this way. During operation of the pressure controller 400, the particle measurement by the data processing unit 304 is interrupted.

Upon judgement of resolution of the clogging at time t2, the controller 302 stops the pressure controller 400. The particle measurement by the data processing unit 304 is then resumed, at time t3.

The operations of the microparticle measuring apparatus 1 have been described. With the microparticle measuring apparatus 1, the particles 4 migrate with use of electrophoresis, meanwhile the clogging is resolved with use of pressure which exerts a strong force. Moreover, it is no longer necessary to apply large current for resolving the clogging, whereby electrolysis at the electrodes, or chemical state around the electrodes due to reversal of polarity may be suppressed, thus enabling accurate measurement.

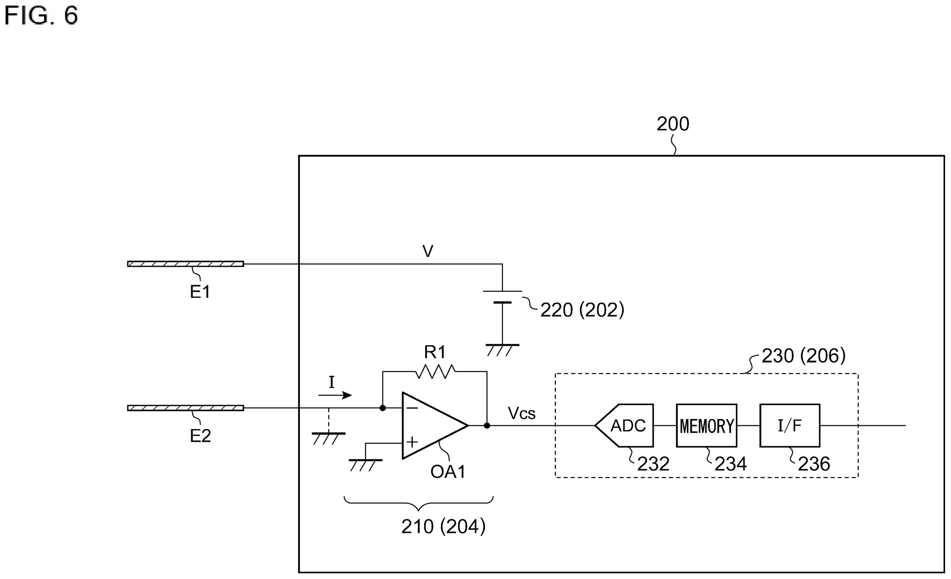

Fig. 6 is a block diagram of a measuring instrument 200A according to one example. The measuring instrument 200A has the transimpedance amplifier 210, the voltage source 220, and the digitizer 230. The voltage source 220 corresponds to the aforementioned voltage source 202. The transimpedance amplifier 210 corresponds to the aforementioned current detection circuit 204. The digitizer 230 corresponds to the aforementioned waveform capture module 206.

The transimpedance amplifier 210 has an operational amplifier OA1 and a resistor R1. The operational amplifier OA1 has an inverting input terminal coupled to the first electrode E1, and has a non-inverting input terminal grounded. The resistor R1 is connected between the inverting input terminal and an output terminal of the operational amplifier OA1.

The voltage source 220 is structured to apply voltage V to the first electrode E1. With the operational amplifier OA1 virtually grounded, the inverting input terminal, that is, the first electrode E1 will have the ground potential (0 V). Voltage V is therefore applied between the first electrode E1 and the second electrode E2.

The ion current I that flows from the first electrode E1 to the second electrode E2 flows into the transimpedance amplifier 210. The transimpedance amplifier 210 will have a voltage Vcs represented by:

$$Vcs = -I \times R1,$$

indicating that the voltage is proportional to the ion current I. The ion current I can therefore be determined by

$$I = Vcs/R1.$$

The digitizer 230 has an A/D converter 232, a memory 234, and an interface circuit 236. The A/D converter 232 is structured to convert a current detection signal Vcs into a digital signal, at a predetermined sampling period. The memory 234 stores waveform data. The interface circuit 236 is structured to transmit the waveform data stored in the memory 234, to the processor 300.

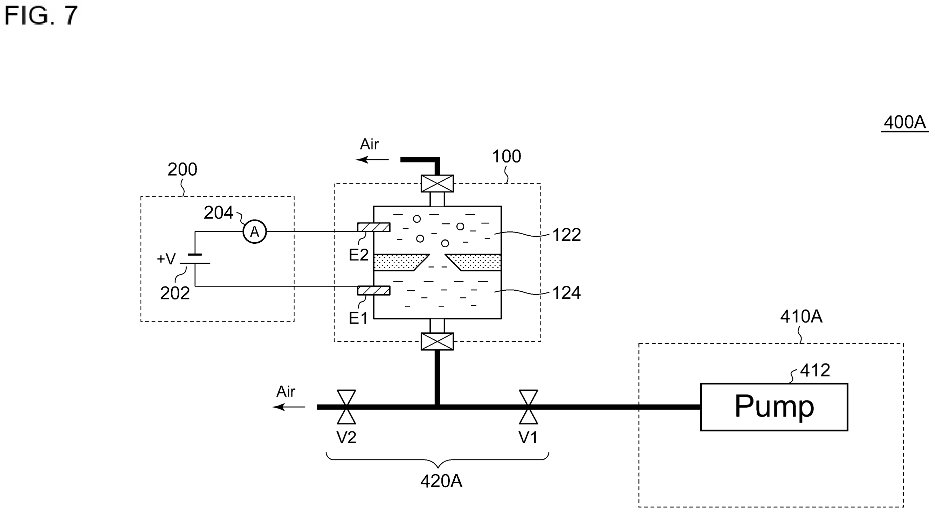

Fig. 7 is a diagram illustrating a pressure controller 400A according to one example. The pressure controller 400A has a pressure source 410A and a control valve 420A. The pressure source 410A has a pneumatic pump 412.

The control valve 420A contains valves V1 and V2. An air vent for buffering is preferably provided, since sudden switchover of the pressure would damage the pore chip 110. The state of the control valve 420A is controlled according to the control signal S2 generated by the controller 302.

In the stop mode of the pressure controller 400A, the valve V1 may be closed, meanwhile the valve V2 may be opened. The pneumatic pump 412 may be stopped, during the stop mode of the pressure controller 400A.

With the valve V1 opened and the valve V2 closed, the pressure controller 400A is brought into the operation mode. This successfully creates the pressure difference between the first liquid chamber 122 and the second liquid chamber 124. Since the first liquid chamber 122 is opened to the atmospheric pressure, use of the pneumatic pump 412 for positive-pressure use can produce pressure applied from the second liquid chamber 124 towards the first liquid chamber 122. Conversely, use of the pneumatic pump 412 for negative-pressure use can produce pressure applied from the first liquid chamber 122 towards the second liquid chamber 124.

The measuring instrument 200 can reverse the polarity of the voltage V applied between the first electrode E1 and the second electrode E2, that is, the directionality of electrophoresis. Upon detection of the clogging, the pressure controller 400 switches the directionality of the pressure, depending on the polarity of the voltage V generated by the measuring instrument 200, that is, the directionality of electrophoresis. More specifically, the pressure difference is generated, so as to push back the particles in a direction opposite to the electrophoretic migration of the particles.

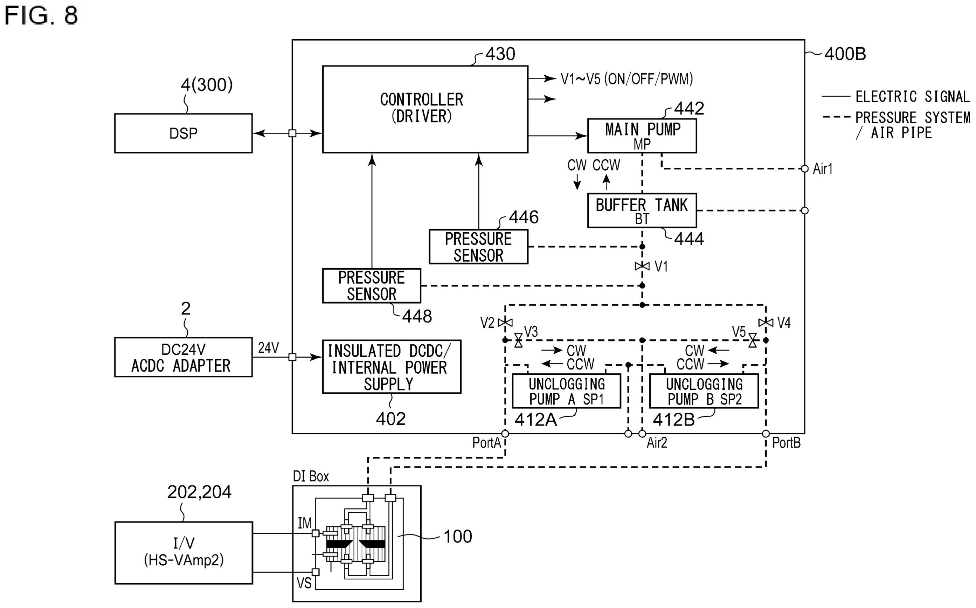

Fig. 8 is a diagram illustrating a pressure controller 400B according to one example. The pressure controller 400B mainly has unclogging pumps 412A and 412B, valves V1 to V5, an internal power supply 402, a main pump 442, a buffer tank 444, and pressure sensors 446 and 448.

The internal power supply 402 receives a DC power supply voltage from an AC adapter as an external power supply, and then boosts or steps down the voltage to generate an internal power supply voltage stabilized at a predetermined voltage level.

The buffer tank 444 is connected to the main pump 442, and accumulates pressure. The pressure sensors 446 and 448 detect pressure inside or on the output side of the buffer tank 444.

The unclogging pump 412A sucks or discharges air, through a port A. The unclogging pump 412B sucks or discharges air, through a port B.

The controller 430 has an input of a control signal from an external digital signal processor (DSP) 4. The DSP 4 may be a part of the processor 300. The controller 430 controls the states of the valves V1 to V5, the unclogging pumps 412A and 412B, and the main pump 442 with reference to the control signal from the DSP 4, and switches the operation mode of the pressure controller 400B. When operating the main pump 442, the controller 430 controls the main pump 442 with reference to outputs of the pressure sensors 446 and 448, so as to keep the pressure of the buffer tank 444 constant.

Operations of the pressure controller 400B illustrated in Fig. 8 will be explained. The pressure controller 400B is allowed for switching over six operation modes.

A first mode and a second mode relate to the aforementioned unclogging.

First Mode

Valves V1, V3, and V4 are kept closed (off), meanwhile V5 is kept opened (on), where V2 is redundant (DC: Don't care). The main pump 442 and the unclogging pump 412B are brought into the stop mode, meanwhile the unclogging pump 412A is brought into the operation mode. According to the first mode, the pore-based device 100 may be unclogged, by controlling the pressure through the port A.

Second Mode

The valves V1, V2, and V5 are kept closed (off), meanwhile V3 is kept opened (on), where V4 is for DC. The main pump 442 and the unclogging pump 412A are brought into the stop mode, meanwhile the unclogging pump 412B is brought into the operation mode. According to the second mode, the pore-based device 100 may be unclogged, by controlling the pressure through the port B.

Third Mode

The valve V1 is kept closed (off), meanwhile V3 and V5 are kept opened (on), where V2 and V4 are redundant (DC: Don't care) irrespective of their opening or closure. The main pump 442, and the unclogging pumps 412A and 412B are brought into the stop mode. The third mode is selectable in a standby state during which the pore-based device 100 is replaced.

Fourth Mode

The valve V1 is kept closed (off), meanwhile V2 to V5 are redundant (DC: Don't care). The main pump 442 is brought into the operation mode, meanwhile the unclogging pumps 412A and 412B are brought into the stop mode. According to the fourth mode, the pressure may be accumulated in the buffer tank 444.

Fifth Mode

The valves V1, V2, and V5 are kept opened (on), meanwhile V3 and V4 are kept closed (off). The main pump 442, and the unclogging pumps 412A and 412B are brought into the stop mode. The fifth mode is selectable after the pressure is accumulated in the buffer tank 444 in the fourth mode, thus successfully pressurizing the pore-based device 100 through the port A, with use of the pressure in the buffer tank 444. Note that the main pump 442 in the fifth mode may be kept operated.

Sixth Mode

The valves V1, V3, and V4 are kept opened (on), meanwhile V2 and V5 are kept closed (off). The main pump 442, and the unclogging pumps 412A and 412B are brought into the stop mode. The sixth mode is selectable after the pressure is accumulated in the buffer tank 444 in the fourth mode, thus successfully pressurizing the pore-based device 100 through the port B, with use of the pressure in the buffer tank 444.

Note that either the unclogging pump 412A or 412B is omissible in the pressure controller 400B illustrated in Fig. 8. Also note that the main pump 442, the buffer tank 444, and the pressure sensors 446 and 448 do not contribute to unclogging, so that the entire or a part thereof is omissible, in a case where only the unclogging function is necessary.

The embodiments have been described. It is to be understood by those skilled in the art that the embodiments are merely illustrative, that the individual constituents or combinations of various processes may be modified in various ways, and that also such modifications fall within the scope of the present invention. Such modified examples will be explained below.

Having described herein the microparticle measuring apparatus, the present invention is not limited to this application, or rather widely applicable to measuring instruments responsible for microcurrent measurement with use of the pore-based device, such as DNA sequencer.

Although the particles in the embodiments have been driven by electrophoresis, the present disclosure is not limited to such application, and is also applicable to a driving system that relies upon diffusion in liquid under concentration gradient, or upon a pressure difference.

In particular, the pressure controller 400B illustrated in Fig. 8 is applicable to the driving system that relies upon pressure difference. More specifically, use of the fifth mode or the sixth mode, in which the pump can be stopped during the driving of the liquid, enables highly accurate particle measurement without being affected by pulsation of the pump.

Having described the present invention with reference to the embodiments, the embodiments merely illustrate the principle and applications of the present invention, allowing a variety of modifications or layout changes without departing from the spirit of the present invention specified by the claims.

INDUSTRIAL APPLICABILITY

The present disclosure relates to measurement with use of a pore-based device.

REFERENCE SIGNS LIST

1 microparticle measuring apparatus, 2 electrolyte solution, 4 particle, 100 pore-based device, 110 pore chip, 112 pore, 120 chip case, 122 first liquid chamber, 124 second liquid chamber, E1 first electrode, E2 second electrode, 200 measuring instrument, 202 voltage source, 204 current detection circuit, 206 waveform capture module, 210 transimpedance amplifier, 220 voltage source, 230 digitizer, 232 A/D converter, 234 memory, 236 interface circuit, 300 processor, 302 controller, 304 data processing unit, V1, V2, V3, V4, V5 valves, 400 pressure controller, 410 pressure source, 412 pneumatic pump, 412A, 412B unclogging pump, 420 control valve, 430 controller, 442 main pump, 444 buffer tank, 446, 448 pressure sensor.

**Claims**

1. A microparticle measuring apparatus used in combination with a pore-based device,

    - wherein the pore-based device comprises a first liquid chamber and a second liquid chamber separated by a partition having a pore,
    - the microparticle measuring apparatus comprising:

        - a measuring instrument structured to measure a current signal that flows between a first electrode provided in the first liquid chamber and a second electrode provided in the second liquid chamber; and
        - a pressure controller structured to generate a pressure difference between the first liquid chamber and the second liquid chamber when clogging of the pore-based device is detected during the measurement.

2. The microparticle measuring apparatus according to claim 1,
    further comprising a controller structured to detect the clogging based on the current signal measured by the measuring instrument.

3. The microparticle measuring apparatus according to claim 2,

    wherein the controller is structured to activate the pressure controller when the clogging is detected, and
    wherein a current signal obtained while the pressure controller is operating is not used for particle measurement.

4. The microparticle measuring apparatus according to claim 3,
wherein the controller is structured to stop the pressure controller when the clogging is determined to be cleared based on the current signal.

5. The microparticle measuring apparatus according to any one of claims 2 to 4,
wherein the controller is structured to detect the clogging based on an AC component of the current signal.

6. The microparticle measuring apparatus according to any one of claims 2 to 4,
wherein the controller is structured to detect the clogging based on a DC component of the current signal.

7. The microparticle measuring apparatus according to any one of claims 1 to 4,

   wherein the measuring instrument is capable of reversing a polarity of voltage applied to the first electrode and the second electrode, and
   the pressure controller is structured to generate a pressure difference in a direction that corresponds to the polarity of voltage when the clogging is detected.

8. The microparticle measuring apparatus according to claim 7,
wherein the pressure controller is structured to generate the pressure difference by increasing or decreasing the pressure of the first liquid chamber relative to the atmosphere, while the second liquid chamber is opened to the atmosphere.

9. The microparticle measuring apparatus according to any one of claims 1 to 4,
wherein the measuring instrument comprises:

   - a transimpedance amplifier structured to convert the current signal into a voltage signal; and
   - a digitizer structured to convert an output of the transimpedance amplifier into a digital signal.

10. A microparticle measuring method with use of a pore-based device,

    - the pore-based device comprising a first liquid chamber and a second liquid chamber separated by a partition having a pore,
    - the microparticle measuring method comprising:

- measuring a current signal that flows between a first electrode provided in the first liquid chamber and a second electrode provided in the second liquid chamber;
- detecting clogging of the pore-based device during measurement; and
- generating a pressure difference between the first liquid chamber and the second liquid chamber, upon detection of the clogging.

FIG. 1

FIG. 2

FIG. 3

1

300
304
DATA PROCESSING UNIT
S3
CONTROLLER
302
PROCESSOR

200
206
WAVE
Vcs
202
204
A
I
V
S1
S2

100
120
122
E1
E2
124
4
112
110
2

400

FIG. 4

EP 4 726 360 A1

PULSED
CURRENT
(AC)

CURRENT
SIGNAL
I

BASE
CURRENT
(DC)

50nA

20～30nA

$\phi 1$      $\phi 2a$      $\phi 2b$

FIG. 5

CURRENT
SIGNAL
I

PRESSURE
CONTROLLER
S2

PARTICLE
MEASUREMENT
S3

$\phi 1$ $\phi 2a$ $\phi 1$

0A

STOP RUN STOP

OPERATE PAUSE OPERATE

$t_0$ $t_1$ $t_2$ $t_3$

EP 4 726 360 A1

14

FIG. 6

FIG. 7

EP 4 726 360 A1

16

FIG. 8

## INTERNATIONAL SEARCH REPORT

| International application No. |
|---|
| **PCT/JP2024/019658** |

### A. CLASSIFICATION OF SUBJECT MATTER

*G01N 15/13*(2024.01)i; *G01N 15/12*(2024.01)i
FI:   G01N15/13 D; G01N15/12 F

According to International Patent Classification (IPC) or to both national classification and IPC

### B. FIELDS SEARCHED

Minimum documentation searched (classification system followed by classification symbols)

G01N15/13; G01N15/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2020-38121 A (ADVANTEST CORPORATION) 12 March 2020 (2020-03-12)<br>paragraphs [0012]-[0037], [0069], fig. 1-8 | 1-10 |
| Y | JP 5-249024 A (TOA MEDICAL ELECTRONICS CO., LTD.) 28 September 1993 (1993-09-28)<br>paragraph [0065] | 1-10 |
| Y | JP 2015-37409 A (HITACHI HIGH-TECHNOLOGIES CORPORATION) 26 February 2015 (2015-02-26)<br>paragraph [0075] | 1-10 |
| Y | JP 2023-2249 A (HITACHI, LTD.) 10 January 2023 (2023-01-10)<br>paragraphs [0070]-[0075], fig. 6 | 1-10 |
| Y | JP 2014-521962 A (IZON SCIENCE LIMITED) 28 August 2014 (2014-08-28)<br>paragraphs [0023]-[0032], fig. 1 | 1-10 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 July 2024** | **13 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
| --- |
| **PCT/JP2024/019658** |

### C. DOCUMENTS CONSIDERED TO BE RELEVANT

| Category* | Citation of document, with indication, where appropriate, of the relevant passages | Relevant to claim No. |
| --- | --- | --- |
| Y | JP 2021-156712 A (ADVANTEST CORPORATION) 07 October 2021 (2021-10-07) paragraph [0046] | 3-8 |
| Y | JP 2014-219313 A (PANASONIC CORPORATION) 20 November 2014 (2014-11-20) paragraph [0040] | 5-6, 8 |
| A | JP 59-15849 A (KIESEWETTER, Holger) 26 January 1984 (1984-01-26) entire text, all drawings | 1-10 |
| A | JP 2005-291840 A (SYSMEX CORPORATION) 20 October 2005 (2005-10-20) entire text, all drawings | 1-10 |
| A | Microfilm of the specification and drawings annexed to the request of Japanese Utility Model Application No. 20040/1974 (Laid-open No. 110278/1975) (TOA MEDICAL ELECTRONICS CO., LTD.) 09 September 1975 (1975-09-09), entire text, all drawings | 1-10 |
| A | WO 2015/121394 A1 (ECOLE POLYTECHNIQUE FEDERALE DE LAUSANNE (EPFL)) 20 August 2015 (2015-08-20) entire text, all drawings | 1-10 |

Form PCT/ISA/210 (second sheet) (July 2022)

## INTERNATIONAL SEARCH REPORT
### Information on patent family members

International application No.

**PCT/JP2024/019658**

| Patent document cited in search report | | | Publication date (day/month/year) | Patent family member(s) | | | Publication date (day/month/year) |
|---|---|---|---|---|---|---|---|
| JP | 2020-38121 | A | 12 March 2020 | US 2020/0072815 A1 paragraphs [0017]-[0050], [0083], fig. 1-8 | | | |
| JP | 5-249024 | A | 28 September 1993 | US 5352975 A column 12, line 7 to column 12, line 28 EP 559140 A1 | | | |
| JP | 2015-37409 | A | 26 February 2015 | US 2013/0176563 A1 paragraph [0080] EP 2623960 A1 CN 103069267 A | | | |
| JP | 2023-2249 | A | 10 January 2023 | (Family: none) | | | |
| JP | 2014-521962 | A | 28 August 2014 | US 2014/0251825 A1 paragraphs [0104]-[0112], fig. 1 EP 2739957 A1 CN 103874914 A | | | |
| JP | 2021-156712 | A | 07 October 2021 | US 2022/0252544 A1 paragraph [0059] CN 114556083 A | | | |
| JP | 2014-219313 | A | 20 November 2014 | (Family: none) | | | |
| JP | 59-15849 | A | 26 January 1984 | US 4521729 A entire text, all drawings EP 92775 A1 | | | |
| JP | 2005-291840 | A | 20 October 2005 | (Family: none) | | | |
| JP | 50-110278 | U1 | 09 September 1975 | (Family: none) | | | |
| WO | 2015/121394 | A1 | 20 August 2015 | EP 2908128 A1 entire text, all drawings | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009014702 A
- JP 2017120257 A